# EUROPÄISCHE PATENTANMELDUNG

(11) **EP 1 640 629 A1**
(43) Veröffentlichungstag der Anmeldung: **29.03.2006**
(21) Anmeldenummer: 05108673.4
(22) Anmeldetag: 20.09.2005
(51) Int. Cl.: F16D 41/22

(54) **Selbstschaltende Drehkupplung**

(30) Priorität: 25.09.2004 DE 102004046600
(71) Anmelder: Valeo Sicherheitssysteme GmbH, 85253 Erdweg (DE)
(72) Erfinder: Schwab, Dittmar c/o VALEO SECURITE HABITACLE, 94042, Creteil Cedex (FR)
(74) Vertreter: Rosolen-Delarue, Katell

(57) **Zusammenfassung**

Die Erfindung betrifft eine selbstschaltende Drehkupplung zur Verbindung einer Antriebseinrichtung (2) mit einer Abtriebseinrichtung (3), wobei die Drehkupplung (1) eine mit einer Abtriebswelle (5) der Antriebseinrichtung (2) verbindbare erste Kupplungshälfte (6) und eine mit der Abtriebseinrichtung (3) verbindbare zweite Kupplungshälfte (22) umfaßt, und wobei die beiden Kupplungshälften (6, 22) auf ihren einander zugewandten Stirnseiten über den Umfang verteilt angeordnete Kupplungselemente (17, 23) aufweisen.

Um eine kostengünstig herstellbare Drehkupplung (1) anzugeben, die nur so lange eine Verbindung zwischen der Antriebseinrichtung (2) und der Abtriebseinrichtung (3) aufrechterhält, wie sich die Antriebseinrichtung (2) in eine vorgegebene Richtung dreht und bei welcher für das Ein- und Auskuppeln kein elektrischer Strom benötigt wird, schlägt die Erfindung vor, daß die erste Kupplungshälfte (6) ein mit der Abtriebswelle (5) der Antriebseinrichtung (2) drehfest verbindbares erstes hülsenförmiges Teil (7) umfaßt, das bei Drehung der Abtriebswelle (5) in der vorgegebenen Richtung von dieser gegen den Druck einer ersten Feder (11) axial in die Kupplungsstellung verschoben wird, und daß bei Stillstand der Abtriebswelle (5) das hülsenförmige Teil (7) durch die erste Feder (11) in seine Ruhestellung zurückverschoben wird.

## Beschreibung

Die Erfindung betrifft eine selbstschaltende Drehkupplung zur Verbindung einer Antriebseinrichtung mit einer Abtriebseinrichtung, wobei die Drehkupplung eine mit einer Abtriebswelle der Antriebseinrichtung verbindbare erste Kupplungshälfte und eine mit der Abtriebseinrichtung verbindbare zweite Kupplungshälfte umfaßt, und wobei die beiden Kupplungshälften auf ihren einander zugewandten Stirnseiten über den Umfang verteilt angeordnete Kupplungselemente aufweisen.

Um Kraftfahrzeuge nachträglich kostengünstig mit einer Vorrichtung zum automatischen Schließen des Kofferraumdeckels zu versehen, wird in der nicht vorveröffentlichten deutschen Patentanmeldung 10 2004 004 957.2 vorgeschlagen, an der Heckklappe das Ende eines Antriebsseiles zu befestigen, mittels dem dann von einer im Kofferraum zu befestigenden Antriebseinrichtung der Kofferraumdeckel zugezogen werden kann. Dabei umfaßt die Antriebseinrichtung im wesentlichen einen Elektromotor, eine Drehkupplung und eine Seiltrommel, wobei als Kupplung eine elektromagnetische Schaltkupplung verwendet wird, die nach dem Schließen des Kofferraumdeckels die Seilrolle von dem Elektromotor entkuppelt.

Nachteilig ist bei dieser Vorrichtung, daß entsprechende Schaltkupplungen relativ teuer sind und daß für ihren Betrieb elektrischer Strom benötigt wird.

Der Erfindung liegt die Aufgabe zugrunde, eine kostengünstig herstellbare Drehkupplung anzugeben, die nur so lange eine Verbindung zwischen der Antriebseinrichtung und der Abtriebseinrichtung aufrechterhält, wie sich die Antriebseinrichtung dreht und bei welcher für das Ein- und Auskuppeln kein elektrischer Strom benötigt wird.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, eine selbstschaltende Drehkupplung zu verwenden, bei welcher die erste Kupplungshälfte ein erstes hülsenförmiges Teil umfaßt, welches drehfest, aber gegen den Druck einer ersten Feder von einer Ruhestellung in eine Kupplungsstellung axial verschiebbar mit der Abtriebswelle der jeweiligen Antriebseinrichtung verbindbar ist, derart, daß bei Drehung der Abtriebswelle in der vorgegebenen Richtung das erste hülsenförmige Teil gegen den Druck der ersten Feder in die Kupplungsstellung und bei Stillstand der Abtriebswelle durch die erste Feder in seine Ruhestellung zurückverschoben wird.

Vorzugsweise ist mit dem ersten hülsenförmigen Teil ein zweites hülsenförmiges Teil drehfest verbunden, welches auf seiner dem ersten hülsenförmigen Teil abgewandten Stirnseite die Kupplungselemente trägt und gegen den Druck einer sich an dem ersten hülsenförmigen Teil abstützenden zweiten Feder axial verschiebbar angeordnet ist, so daß bei einer axialen Verschiebung des ersten hülsenförmigen Teiles die Kupplungselemente des zweiten hülsenförmigen Teiles elastisch gegen oder zwischen die Kupplungselemente der zweiten Kupplungshälfte gedrückt werden.

Bei einer Ausführungsform der Erfindung ist zur axialen Verschiebung des ersten hülsenförmigen Teiles vorgesehen, daß das erste hülsenförmige Teil mit einem in seiner Seitenwand angeordneten ersten Langloch mit in axialer Richtung schrägem Verlauf versehen ist, in welches ein Mitnehmer der Abtriebswelle der entsprechenden Antriebseinrichtung eingreift, so daß bei Drehung der Abtriebswelle das erste hülsenförmige Teil von seiner Ruhestellung axial in Richtung auf die zweite Kupplungshälfte verschoben wird.

Um einen möglichst platzsparenden Aufbau der erfindungsgemäßen Drehkupplung zu erreichen, ist vorgesehen, daß das erste hülsenförmige Teil einen der Antriebseinrichtung zugewandten Fußbereich und ein sich daran anschließendes schmaleres zylinderförmiges Vorderteil aufweist, wobei sich die erste Feder zwischen einem gehäusefesten Teil der Drehkupplung und dem Fußbereich abstützt und das zylinderförmige Vorderteil verschiebbar in dem zweiten hülsenförmigen Teil angeordnet ist. Außerdem ist das erste hülsenförmige Teil mit einem zweiten Mitnehmer verbunden, welcher in mindestens ein sich in axialer Richtung erstreckendes zweites Langloch der Wand des zweiten hülsenförmigen Teiles eingreift.

Insbesondere bei Verwendung der erfindungsgemäßen Drehkupplung im Zusammenhang mit der eingangs erwähnten Vorrichtung zum automatischen Schließen eines Kofferraumdeckels hat es sich als zweckmäßig erwiesen, wenn die zweite Kupplungshälfte in die als Seiltrommel ausgebildete Abtriebseinrichtung dadurch integriert wird, daß die Seiltrommel hülsenförmig ausgebildet ist und innenliegende Kupplungselemente aufweist.

Die Kupplungselemente können sowohl klauenförmig als auch als Zahnkränze ausgebildet sein. Als vorteilhaft hat es sich erwiesen, wenn im Falle eines Zahnkranzes die einzelnen Zähne eine sägezahnförmige Gestalt aufweisen, so daß nur in der vorgegebenen Drehrichtung eine Verzahnung der Kupplungselemente miteinander erfolgt.

Weitere Einzelheiten und Vorteile der Erfindung ergeben sich aus den folgenden anhand von Figuren erläuterten Ausführungsbeispielen. Es zeigen:

Fig.1 den Längsschnitt durch eine erfindungsgemäße Drehkupplung zur Verbindung eines Antriebsmotors mit einer Seiltrommel und

Fig.2 eine nur teilweise im Schnitt dargestellte Seitenansicht der ersten Kupplungshälfte der in Fig.1 dargestellten Drehkupplung.

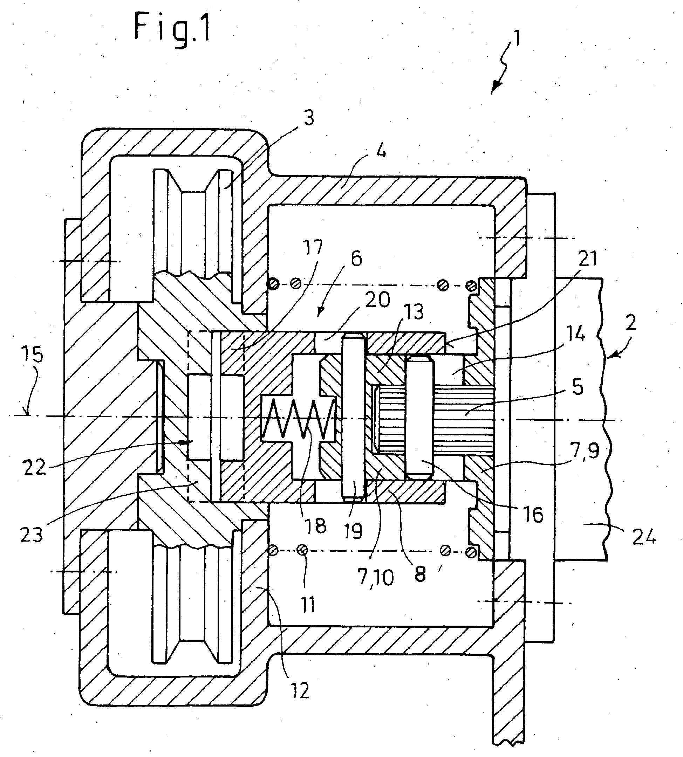

In Fig.1 ist mit 1 eine erfindungsgemäße Drehkupplung zur Verbindung eines Elektromotors 2 mit einer Seiltrommel 3 einer Vorrichtung zum automatischen Schließen der Heckklappe eines Kraftfahrzeuges bezeichnet. Dabei befinden sich die Drehkupplung 1 und die Seiltrommel 3 in einem gemeinsamen kammerförmig aufgebauten Gehäuse 4.

Die Drehkupplung 1 umfaßt eine mit der Abtriebswelle 5 des Elektromotors 2 verbundene erste Kupplungshälfte 6, die im wesentlichen aus zwei elastisch miteinander verbundenen hülsenförmigen Teilen 7, 8 besteht.

Das erste hülsenförmige Teil 7 weist einen dem Elektromotor 2 zugewandten Fußbereich 9 und ein sich daran anschließendes schmaleres zylinderförmiges Vorderteil 10 auf. In der in Fig.1 dargestellten Ruhestellung wird das hülsenförmige Teil 7 durch eine erste Feder 11 (Druckfeder) gehalten, die sich einerseits an dem Fußbereich 9 und andererseits an einer Kammerwand 12 des Gehäuses 4 abstützt.

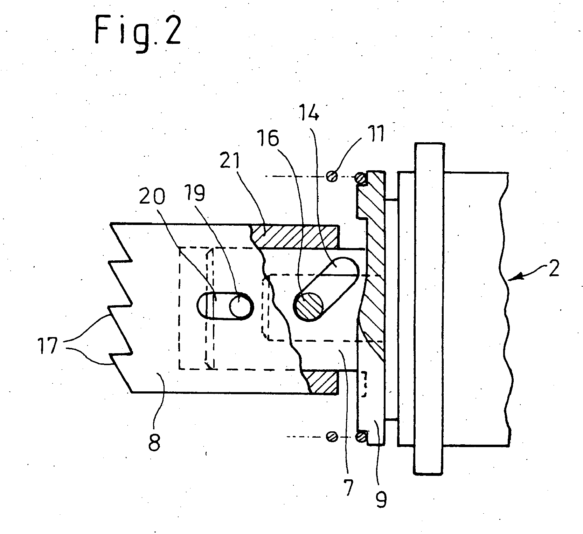

Das erste hülsenförmige Teil 7 ist außerdem mit einem in seiner Seitenwand 13 angeordneten ersten Langloch 14 versehen, welches einen, in Richtung der Längsachse 15 der Drehkupplung 1 gesehen, schrägen Verlauf besitzt (Fig.2), in welches ein mit der Abtriebswelle 5 des Elektromotors 2 drehfest verbundener erster Mitnehmer 16 eingreift.

Das zylinderförmige Vorderteil 10 des ersten hülsenförmigen Teiles 7 ist drehfest in dem zweiten hülsenförmigen Teil 8 angeordnet, welches auf seiner dem ersten hülsenförmigen Teil 7 abgewandten Stirnseite Kupplungselemente 17 trägt und gegen den Druck einer sich an dem ersten hülsenförmigen Teil 7 abstützenden zweiten Feder 18 axial verschiebbar angeordnet ist. Hierzu ist das erste hülsenförmige Teil 7 mit einem zweiten Mitnehmer 19 verbunden, der in mindestens ein sich in axialer Richtung erstreckendes zweites Langloch 20 der Seitenwand 21 des zweiten hülsenförmigen Teiles 8 eingreift.

Bei dem in Fig.1 dargestellten Ausführungsbeispiel umfaßt die Seiltrommel 3 die zweite Kupplungshälfte 22 der Drehkupplung 1. Hierzu ist die Seiltrommel 3 ebenfalls hülsenförmig ausgebildet, wobei die Kupplungselemente 23 innenliegend angeordnet sind.

Bei den Kupplungselementen 17 und 23 der beiden Kupplungshälften 6 und 22 handelt es sich um sägezahnförmig ausgebildete Zähne jeweils eines Zahnkranzes (Fig.2), so daß die Seiltrommel nur in einer vorgegebenen Drehrichtung durch den Elektromotor gedreht werden kann.

Nachfolgend wird auf die Wirkungsweise der erfindungsgemäßen Drehkupplung eingegangen. Dabei wird von der in Fig.1 dargestellten Ruhestellung der Kupplung ausgegangen, bei der sich die Abtriebswelle 5 des Elektromotors 2 nicht dreht und die Kupplungselemente 17, 23 der beiden Kupplungshälften 6, 22 getrennt sind. Der Fußbereich 9 des ersten hülsenförmigen Teiles 7 liegt an dem Gehäuse 24 des Elektromotors 2 an.

Wird der Elektromotor 2 aktiviert und dreht sich dessen Abtriebswelle 5 mit dem ersten Mitnehmer 16, so schiebt dieser das erste hülsenförmige Teil 7 über die Schräge des ersten Langloches 14 und gegen den Druck der ersten Feder 11 in Richtung zur Seiltrommel 3. Über die zwischen den beiden hülsenförmigen Teilen 7 und 8 befindliche zweite Feder 18 wird dann das zweite hülsenförmige Teil 8 ebenfalls zur Seiltrommel 3 verschoben.

Sofern die Kupplungselemente 17 des zweiten hülsenförmigen Teiles 8 lagerichtig im Verhältnis zu den Kupplungselementen 23 der Seiltrommel 3 angeordnet sind, wird über die beiden Mitnehmer 16, 19 durch die Abtriebswelle 5 des Elektromotors 2 nach vollendetem Hub des ersten hülsenförmigen Teiles 7 die Seiltrommel 3 mitgedreht, so daß ein nicht dargestelltes Seil die entsprechende Heckklappe in ihre geschlossene Stellung zieht.

Hat das erste hülsenförmige Teil 7 den Axialhub über die Formschräge durch den ersten Mitnehmer 16 bereits vollendet und beginnt sich zu drehen, und befindet sich das zweite hülsenförmige Teil 8 noch nicht mit seinen Kupplungselementen 17 vollständig mit den Kupplungselementen 23 der Seiltrommel 3 im Eingriff, so erfolgt der vollständige Eingriff der Kupplungselemente 17 und 23 bei der weiteren Drehbewegung.

Wird der Elektromotor 2 abgeschaltet, übernimmt z.B. eine Zuziehhilfe (nicht dargestellt) des Schlosses der Heckklappe das weitere Zuziehen der Heckklappe. Dabei wird das entsprechende an der Seiltrommel 3 befestigte Seil entlastet, so daß sich die Kupplungselemente 17 und 23 der Seiltrommel 3 und des zweiten hülsenförmigen Teiles 8 voneinander lösen. Dabei schiebt die erste Feder 11 das erste hülsenförmige Teil 7 wieder zurück zum Gehäuse 24 des Elektromotors 2 und das hülsenförmige Teil 7 zieht über den zweiten Mitnehmer 19 das zweite hülsenförmige Teil 8 aus der Verzahnung der Seiltrommel 3. Anschließend kann sich die Seiltrommel 3 frei drehen, so daß sich das Seil über eine nicht dargestellte Spannrolle in eine Ausgangslage abwickeln kann.

### Bezugszeichenliste

- 1: Drehkupplung
- 2: Antriebseinrichtung, Elektromotor
- 3: Abtriebseinrichtung, Seiltrommel
- 4: Gehäuse (Drehkupplung)
- 5: Abtriebswelle
- 6: (erste) Kupplungshälfte
- 7: (erstes) hülsenförmiges Teil
- 8: (zweites) hülsenförmiges Teil
- 9: Fußbereich
- 10: Vorderteil
- 11: erste Feder
- 12: Kammerwand
- 13: Seitenwand
- 14: erstes Langloch
- 15: Längsachse
- 16: (erster) Mitnehmer
- 17: Kupplungselement
- 18: zweite Feder
- 19: zweiter Mitnehmer
- 20: zweites Langloch
- 21: Seitenwand
- 22: (zweite) Kupplungshälfte
- 23: Kupplungselement
- 24: Gehäuse (Motor)

## Patentansprüche

1. Selbstschaltende Drehkupplung zur Verbindung einer Antriebseinrichtung (2) mit einer Abtriebseinrichtung (3), wobei die Drehkupplung (1) eine mit einer Abtriebswelle (5) der Antriebseinrichtung (2) verbindbare erste Kupplungshälfte (6) und eine mit der Abtriebseinrichtung (3) verbindbare zweite Kupplungshälfte (22) umfaßt, und wobei die beiden Kupplungshälften (6, 22) auf ihren einander zugewandten Stirnseiten über den Umfang verteilt angeordnete Kupplungselemente (17, 23) aufweisen, mit den Merkmalen:
a) die erste Kupplungshälfte (6) umfaßt ein erstes hülsenförmiges Teil (7), welches drehfest, aber gegen den Druck einer ersten Feder (11) von einer Ruhestellung in eine Kupplungsstellung axial verschiebbar mit der Abtriebswelle (5) der Antriebseinrichtung (2) verbindbar ist, derart, daß bei Drehung der Abtriebswelle (5) in einer vorgegebenen Richtung das erste hülsenförmige Teil (7) gegen den Druck der ersten Feder (11) in die Kupplungsstellung und bei Stillstand der Abtriebswelle (5) durch die erste Feder (11) in seine Ruhestellung zurückverschoben wird;
b) mit dem ersten hülsenförmigen Teil (7) ist ein zweites hülsenförmiges Teil (8) drehfest verbunden, welches auf seiner dem ersten hülsenförmigen Teil (7) abgewandten Stirnseite die Kupplungselemente (17) trägt und gegen den Druck einer sich an dem ersten hülsenförmigen Teil (7) abstützenden zweiten Feder (18) axial verschiebbar angeordnet ist, so daß bei einer axialen Verschiebung des ersten hülsenförmigen Teiles (7) die Kupplungselemente (17) des zweiten hülsenförmigen Teiles (8) elastisch gegen oder zwischen die Kupplungselemente (23) der zweiten Kupplungshälfte (22) gedrückt werden.

2. Selbstschaltende Drehkupplung, **dadurch gekennzeichnet, daß** die erste Kupplungshälfte (6) einen mit der Abtriebswelle (5) der Antriebseinrichtung (2) drehfest verbindbaren ersten Mitnehmer (16) umfaßt, und daß das erste hülsenförmige Teil (7) mit einem in seiner Seitenwand (13) angeordneten ersten Langloch (14) mit in axialer Richtung schrägem Verlauf versehen ist, in welches der erste Mitnehmer (16) eingreift, so daß bei Drehung der Abtriebswelle (5) das erste hülsenförmige Teil (7) von seiner Ruhestellung axial in Richtung auf die zweite Kupplungshälfte (22) verschoben wird.

3. Selbstschaltende Drehkupplung nach Anspruch 1 oder 2, **dadurch gekennzeichnet, daß** das erste hülsenförmige Teil (7) einen der Antriebseinrichtung (2) zugewandten Fußbereich (9) und ein sich daran anschließendes schmaleres zylinderförmiges Vorderteil (10) aufweist,
daß sich die erste Feder (11) zwischen einem gehäusefesten Teil der Drehkupplung und dem Fußbereich (9) des ersten hülsenförmigen Teiles (7) abstützt,
daß das zylinderförmige Vorderteil (10) verschiebbar in dem zweiten hülsenförmigen Teil (8) angeordnet ist, und
daß das erste hülsenförmige Teil (7) mit einem zweiten Mitnehmer (19) verbunden ist, welcher in mindestens ein sich in axialer Richtung erstreckendes zweites Langloch (20) der Seitenwand (21) des zweiten hülsenförmigen Teiles (8) eingreift.

4. Selbstschaltende Drehkupplung nach einem der Ansprüche 1 bis 3, **dadurch gekennzeichnet, daß** die zweite Kupplungshälfte (22) hülsenförmig ausgebildet ist, derart, daß die Kupplungselemente (23) innenliegend angeordnet sind.

5. Selbstschaltende Drehkupplung nach einem der Ansprüche 1 bis 4, **dadurch gekennzeichnet, daß** es sich bei der Abtriebseinrichtung (3) um eine Seiltrommel einer Vorrichtung zum automatischen Schließen der Heckklappe eines Kraftfahrzeuges handelt.

6. Selbstschaltende Drehkupplung nach Anspruch 5 in Verbindung mit Anspruch 4, **dadurch gekennzeichnet, daß** die Seiltrommel (3) hülsenförmig ausgebildet ist und die zweite Kupplungshälfte (22) umfaßt.

7. Selbstschaltende Drehkupplung nach einem der Ansprüche 1 bis 6, **dadurch gekennzeichnet, daß** es sich bei den Kupplungselementen (17, 23) der beiden Kupplungshälften (6, 22) um Zahnkränze handelt, wobei die einzelnen Zähne eine sägezahnförmige Gestalt aufweisen.
